# EUROPEAN PATENT APPLICATION

(11) **EP 4 228 058 A1**
(43) Date of publication of application: **16.08.2023**
(21) Application number: 22806492.9
(22) Date of filing: 26.04.2022
(51) Int. Cl.: H01M 10/613, B60L 58/30, B60K 11/04

(54) **VEHICLE THERMAL MANAGEMENT SYSTEM FOR FUEL CELL VEHICLE**

(30) Priority: 12.05.2021 CN 202110518154
(71) Applicant: China Faw Co., Ltd., Changchun, Jilin 130011 (CN)
(72) Inventor: LI, Chuan, Changchun, Jilin 130011 (CN); LIU, Yuanzhi, Changchun, Jilin 130011 (CN); WANG, Deping, Changchun, Jilin 130011 (CN); JIANG, Hong, Changchun, Jilin 130011 (CN)
(74) Representative: Grassi, Stefano
(86) International application number: PCT/CN2022/089158
(87) International publication number: WO 2022/237523

(57) **Abstract**

The present application provides a thermal management system of fuel cell vehicle, and in particular to the technical field of vehicles, which includes that: a power motor thermal management loop, which comprises a first water pump, a charger, a direct-current transformer, a power motor inverter, a power motor body and a first radiator, which are communicated with each other in sequence; a power cell thermal management loop, which comprises a second water pump, a second radiator, a third radiator and a power cell, which are communicated with each other in sequence; and a fuel cell thermal management loop, which comprises a fourth water pump, a fuel cell and a sixth radiator, which are communicated with each other in sequence; the power motor thermal management loop is configured to perform heat exchange with the fuel cell thermal management loop, so that the power motor thermal management loop preheats the fuel cell; and the power cell thermal management loop is configured to perform heat exchange with the fuel cell thermal management loop, so that the fuel cell heats the power cell.

## Description

### Cross-Reference to Related Application

The present invention claims the priority of Chinese Patent Application No.202110518154.X, filed to the China Patent Office on May 12, 2021, and entitled "Thermal Management System of Fuel Cell Vehicle", the entire contents of which are herein incorporated by reference.

### Technical Field

The present invention relates to the technical field of vehicles, and in particular to a thermal management system of a fuel cell vehicle.

### Background

Due to a slow power response, a fuel cell system cannot independently meet the driving requirements of an electric vehicle, therefore in the related art, a fuel cell vehicle must cooperate with a power cell to meet the requirements of the driving performance of the electric vehicle.

However, in the related art, in a vehicle loaded with a fuel cell and a power cell, a thermal management system of the fuel cell and a thermal management system of the power cell are independent of each other, such that energy utilization is unreasonable, resulting in energy waste, and the endurance mileage is shortened as a result.

Therefore, a thermal management system of a fuel cell vehicle is urgently needed to solve the above-mentioned problems.

### Summary

At least some embodiments of the present invention provides a thermal management system of fuel cell vehicle, so as to solve the technical problem of unreasonable energy utilization of the fuel cell vehicle in the related art.

The technical solutions utilized in the present invention are as follows:
An embodiment of present invention provides a thermal management system of fuel cell vehicle, including:
a power motor thermal management loop, which comprises a first water pump, a charger, a direct-current transformer, a power motor inverter, a power motor body and a first radiator, which are communicated with each other in sequence, wherein the first water pump is configured to drive a cooling liquid in the power motor thermal management loop to flow and exchange a thermal with the first radiator, the power motor body, the power motor inverter, the direct-current transformer and the charger;
a power cell thermal management loop, which comprises a second water pump, a second radiator, a third radiator and a power cell, which are communicated with each other in sequence, wherein the second water pump is configured to drive the cooling liquid in the power cell thermal management loop to flow and exchange the heat with the third radiator, the second radiator and the power cell; and
a fuel cell thermal management loop, which comprises a fourth water pump, a fuel cell and a sixth radiator, which are communicated with each other in sequence, wherein the fourth water pump is configured to drive the cooling liquid in the fuel cell thermal management loop to flow and exchange the heat with the fuel cell and the sixth radiator; and
the power motor thermal management loop is configured to perform heat exchange with the fuel cell thermal management loop, so that the power motor thermal management loop preheats the fuel cell; and the power cell thermal management loop may perform the heat exchange with the fuel cell thermal management loop, so that the fuel cell heats the power cell.

### Brief Description of the Drawings

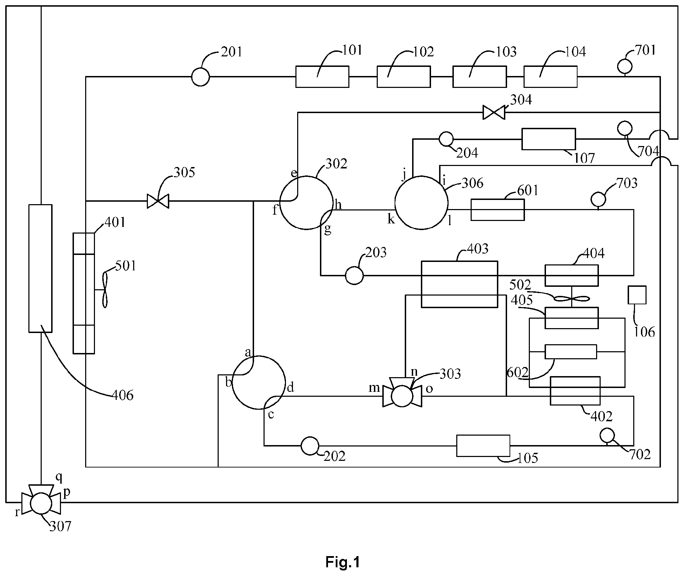

Fig. 1 is a schematic diagram of a thermal management system of fuel cell vehicle according to an embodiment of the present invention.

The schematic diagram include the following apparatus:
101. Charger; 102. Direct-current transformer; 103. Power motor inverter; 104. Power motor body; 105. Power cell; 106. Passenger compartment; 107. Fuel cell;
201. First water pump; 202. Second water pump; 203. Third water pump; 204. Fourth water pump;
301. First four-way valve; 302. Second four-way valve; 303. Three-way valve; 304. First two-way valve; 305. Second two-way valve; 306. Third four-way valve; 307. Wax thermostat;
401. First radiator; 402. Second radiator; 403. Third radiator; 404. Fourth radiator; 405. Fifth radiator; 406. Sixth radiator;
501. First fan; 502. Second fan;
601. Electric heating device; 602. Air conditioner compressor assembly; and
701. First temperature sensor; 702. Second temperature sensor; 703. Third temperature sensor; 704. Fourth temperature sensor.

### Detailed Description

The technical solutions provided in the present invention will be described below in combination with the drawings and by way of detailed description.

In the description of the present invention, it should be noted that orientation or position relationships indicated by terms "center", "upper", "lower", "left", "right", "vertical", "horizontal", "inside", "outside" and the like are generally orientation or position relationships shown on the basis of the drawings, and are for the convenience of describing the present invention and simplifying the description, but do not indicate or imply that the referred apparatus or elements must have specific orientations or must be constructed and operated in specific orientations, and thus cannot be construed as limitations to the present invention. In addition, the terms "first" and "second" are taken for descriptive purposes only and cannot be interpreted as indicating or implying relative importance. The terms "first position" and "second position" are two different positions.

In the description of the present invention, it should be noted that the terms "installed", "connected" and "connection" should be understood in a broad sense, unless otherwise expressly specified and limited. For example, the connection may be a fixed connection, and may also be a detachable connection; may be a mechanical connection, and may also be an electrical connection; and may be a direct connection, may be an indirect connection through an intermediate medium, and may also be internal communication between two elements. For those of ordinary skilled in the art, the specific meanings of the above terms in the present invention may be understood in specific situations.

Referring to Fig. 1, the present embodiment provides a thermal management system of fuel cell vehicle. The thermal management system of fuel cell vehicle comprises a power motor thermal management loop, a power cell thermal management loop, and a fuel cell thermal management loop.

Optionally, the power motor thermal management loop comprises a first water pump 201, a charger 101, a direct-current transformer 102, a power motor inverter 103, a power motor body 104 and a first radiator 401, which can be communicated with each other in sequence, wherein the first water pump 201 can drive cooling liquid in the power motor thermal management loop to flow and exchange heat with the first radiator 401, the power motor body 104, the power motor inverter 103, the direct-current transformer 102 and the charger 101. The first radiator 401 functions to enable the cooling liquid in the power motor thermal management loop to exchange heat with external air.

The power cell thermal management loop comprises a second water pump 202, a second radiator 402, a third radiator 403 and a power cell 105, which are communicated with each other in sequence, wherein the second water pump 202 is configured to drive the cooling liquid in the power cell thermal management loop to flow and exchange heat with the third radiator 403, the second radiator 402 and the power cell 105.

The fuel cell thermal management loop comprises a fourth water pump 204, a fuel cell 107 and a sixth radiator 406, which are communicated with each other in sequence, wherein the fourth water pump 204 is configured to drive the cooling liquid in the fuel cell thermal management loop to flow and exchange heat with the fuel cell 107 and the sixth radiator 406.

The power motor thermal management loop is configured to perform heat exchange with the fuel cell thermal management loop, so that the power motor thermal management loop preheats the fuel cell 107; and the power cell thermal management loop is configured to perform heat exchange with the fuel cell thermal management loop, so that the fuel cell 107 heats the power cell 105.

The working efficiency of a fuel cell system is greatly influenced by temperature, after the fuel cell system is turned on, the working efficiency is very low before the fuel cell system reaches a set working temperature, especially under some extreme working conditions, a fuel cell needs to be repeatedly started and stopped, so that the energy utilization rate of hydrogen of the fuel cell is reduced, the loss of hydrogen is increased, and the endurance mileage of the vehicle is thus shortened.

In the thermal management system of fuel cell vehicle provided in the present embodiment, the power motor thermal management loop is configured to perform heat exchange with the fuel cell thermal management loop, so that the fuel cell 107 is configured to be preheated through the waste heat of the power motor body 104, thereby avoiding energy waste.

Meanwhile, the power cell thermal management loop is configured to perform heat exchange with the fuel cell thermal management loop, so that the power cell 105 is configured to be heated through the waste heat of the fuel cell 107, thereby avoiding energy waste.

Optionally, in the present embodiment, the thermal management system of fuel cell vehicle further comprises a passenger compartment thermal management loop, the passenger compartment thermal management loop comprises a passenger compartment heating loop and a passenger compartment cooling loop, the passenger compartment heating loop is configured to heat a passenger compartment 106, and the passenger compartment cooling loop is configured to cool the passenger compartment 106.

In the fuel cell thermal management loop, the fuel cell 107 is a cooled assembly.

Optionally, in the present embodiment, the fuel cell thermal management loop further comprises a third four-way valve 306, and the third four-way valve 306 is configured to control whether the passenger compartment heating loop is communicated with the fuel cell thermal management loop. The fuel cell thermal management loop further comprises a fourth temperature sensor 704, and the fourth temperature sensor 704 is configured to detect the temperature of the cooling fluid in the fuel cell heat management loop after it flows out from the fuel cell 107. Optionally, in the present embodiment, the fuel cell thermal management loop further comprises a wax thermostat 307, and the wax thermostat 307 is configured to control whether the cooling fluid in the fuel cell thermal management loop flow to the sixth radiator 406 or not. In order to increase the heat exchange amount between the cooling fluid in the fuel cell thermal management loop and the external air, in the present embodiment, the fuel cell thermal management loop further comprises a first fan 501.

In the power motor thermal management loop, the charger 101, the direct-current transformer 102, the power motor inverter 103, and the power motor body 104 are cooled assemblies.

Optionally, in the present embodiment, the power motor thermal management loop further comprises a first temperature sensor 701, and the first temperature sensor 701 is configured to detect the temperature of the cooling liquid in the power motor thermal management loop after it flows out from the cooled assembly.

The power motor thermal management loop further comprises a first fan 501, the first fan 501 is configured on the first radiator 401, and the first fan 501 is configured to accelerate the heat dissipation rate of the first radiator 401, thereby increasing the heat exchange amount between the cooling liquid in the power motor thermal management loop and the external air.

Optionally, in the present embodiment, the power motor thermal management loop further comprises a first two-way valve 304 and a second two-way valve 305. The first two-way valve 304 functions to communicate the power motor thermal management loop with the power cell thermal management loop and the passenger compartment heating loop to heat the cooling liquid in the passenger compartment heating loop and the cooling liquid in the power cell thermal management loop through the waste heat of the power motor. The second two-way valve 305 functions to communicate the power motor thermal management loop with the power cell thermal management loop to cool the power cell 105 through the first radiator 401.

In the present embodiment, in the power cell thermal management loop, the power cell 105 is a cooled assembly.

Optionally, in the present embodiment, the power cell thermal management loop further comprises a second temperature sensor 702, and the second temperature sensor 702 is configured to detect the temperature before the cooling liquid in the power cell thermal management loop enters the power cell 105 to calculate the output power of an electric heating apparatus 601 and an air conditioner compressor assembly 602.

Optionally, the thermal management system of fuel cell vehicle further comprises a three-way valve 303, and the three-way valve 303 is configured to control whether the cooling liquid in the power cell thermal management loop flow to the third radiator 403 .

Optionally, the thermal management system of fuel cell vehicle further comprises a first four-way valve 301, and the first four-way valve 301 is configured to control whether the power motor thermal management loop is communicated with the power cell thermal management loop.

In the passenger compartment heating loop, the passenger compartment 106 is a heated assembly.

Optionally, in the present embodiment, the passenger compartment heating loop includes a third water pump 203, the third radiator 403, a fourth radiator 404 and the electric heating apparatus 601, and the electric heating apparatus 601 is configured to heat the cooling liquid in the passenger compartment heating loop, and the third water pump 203 is configured to drive the cooling liquid in the passenger compartment heating loop to flow and exchange heat with the third radiator 403 and the fourth radiator 404. The third radiator 403 functions to enable the cooling liquid in the power cell thermal management loop to exchange heat with the passenger compartment 106. The fourth radiator 404 functions to enable the cooling liquid in the passenger compartment heating loop to exchange heat with the passenger compartment 106. The electric heating apparatus 601 functions to convert the electric energy of the power cell 105 into heat energy to heat the cooling liquid in the passenger compartment heating loop.

Optionally, in the present embodiment, the passenger compartment heating loop further comprises a second four-way valve 302, a second fan 502 and a third temperature sensor 703, wherein the second four-way valve 302 functions to communicate the power motor thermal management loop with the passenger compartment heating loop. The second fan 502 functions to increase the heat exchange amount between the cooling liquid in the passenger compartment heating loop and the passenger compartment 106. The third temperature sensor 703 functions to detect the temperature before the cooling liquid in the passenger compartment heating loop enters the electric heating apparatus 601 to calculate the output power of the electric heating apparatus 601 and the working rotating speed of the second fan 502.

In the passenger compartment cooling loop, the passenger compartment 106 is a cooled assembly.

The passenger compartment cooling loop comprises the air conditioning compressor assembly 602, the second radiator 402 and a fifth radiator 405, wherein the air conditioning compressor assembly 602 is configured to compress and cool a condensing agent in the passenger compartment cooling loop and drive the condensing agent to flow, and the condensing agent is configured to exchange heat with the second radiator 402 and the fifth radiator 405.

The second radiator 402 functions to enable the cooling liquid in a power cell cooling loop to exchange heat with the condensing agent in the passenger compartment cooling loop. The fifth radiator 405 functions to enable the condensing agent in the passenger compartment cooling loop to exchange heat with the passenger compartment 106.

In order to increase the heat exchange amount between the condensing agent in the passenger compartment cooling loop and the passenger compartment 106, in the present embodiment, the passenger compartment cooling loop further comprises a second fan 502.

In the present embodiment, the fourth radiator 404, the fifth radiator 405 and the second fan 502 constitute an air conditioner three-box assembly, which exchanges heat with the passenger compartment 106.

Exemplarily, in the present embodiment, the first four-way valve 301 has four ports, a port A, a port B, a port C and a port D, and the first four-way valve 301 has two states:
State one: The port A is communicated with the port B, and the port C is communicated with the port D; and
State 2: The port A is communicated with the port D, and the port B is communicated with the port C.

The first four-way valve 301 is configured to be selectively in one of the states.

Exemplarily, in the present embodiment, the second four-way valve 302 has four ports, a port E, a port F, a port G and a port H, and the second four-way valve 302 has two states:
State 1: The port E is communicated with the port F, and the port G is communicated with the port H; and
State 2: The port F is communicated with the port G, and the port E is communicated with the port H.

The second four-way valve 302 is configured to be selectively in one of the states.

Exemplarily, in the present embodiment, the third four-way valve 306 has four ports, a port I, a port J, a port K and a port L, and the third four-way valve 306 has two states:
State 1:The port I is communicated with the port J, and the port K is communicated with the port L; and
State 2: The port I is communicated with the port L, and the port J is communicated with the port K.

The third four-way valve 306 are selectively in one of the states.

Exemplarily, in the present embodiment, the three-way valve 303 has three ports, a port M, a port N and a port O, and the three-way valve 303 has two states:
State 1: The port M is communicated with the port N; and
State 2: The port M is communicated with the port O.

The three-way valve 303 is configured to be selectively in one of the states.

Exemplarily, in the present embodiment, both the first two-way valve 304 and the second two-way valve 305 have two shapes. The first two-way valve 304 has two states of "on" and "off"; and the second two-way valve 305 also has two states of "on" and "off". Both the first two-way valve 304 and the second two-way valve 305 are selectively in one of the states.

The thermal management system of fuel cell vehicle provided in the present embodiment has the following advantages:
1. The fuel cell system is preheated through the waste heat of the power motor thermal management loop to shorten the time of the fuel cell 107 reaching the set working temperature after being turned on, thereby improving the working efficiency of the fuel cell system, reducing the hydrogen consumption, and increasing the endurance mileage;
2. In a low-temperature environment, in response to a driver has a warm air requirement, the warm air are provided for the passenger compartment 106 through the waste heat of the fuel cell thermal management loop and the power motor thermal management loop, thereby reducing the energy requirements on the power cell 105, and increasing the endurance mileage;
3. In the low-temperature environment, the power cell 105 is heated through the waste heat of the fuel cell thermal management loop or the power motor thermal management loop, to quickly improve the performance of the power cell 105, thereby improving the whole-vehicle performance;
4. In the low-temperature environment, the air conditioner compressor assembly 602 is configured tonot work, under an extreme working condition of continuous high-current working, for example, during long-time high-speed driving and direct-current charging period, the power cell 105 heats quickly, and the performance is reduced, so that the power cell 105 is cooled by cold air to ensure that the whole-vehicle performance is not reduced; and
5. In the low-temperature environment, in response to the driver has the warm air requirement, the warm air is configured to be provided for the passenger compartment 106 through the waste heat of the power cell 105, thereby reducing the energy requirements on the power cell 105, and increasing the endurance mileage.

In the present embodiment, the thermal management system of fuel cell vehicle comprises a power motor thermal management loop, a power cell thermal management loop, a fuel cell thermal management loop, and a passenger compartment thermal management loop. Correspondingly, the thermal management system of the fuel cell vehicle comprises a power motor thermal management function, a power cell thermal management function, a fuel cell thermal management function, and a passenger compartment thermal management function.

In the thermal management system of fuel cell vehicle, a whole-vehicle controller controls the water pump, the valve body, the fan, the electric heating apparatus and the air conditioner compressor assembly to work according to the refrigeration and warm air requirements of the driver, the working states of multiple assemblies and the temperature of the cooling liquid in multiple cooling loops to ensure that each assembly works normally, and reduce the energy loss of the power cell.

In the present embodiment, the power motor thermal management function, the power cell thermal management function, the fuel cell thermal management function and the passenger compartment thermal management function have the same priority, and the multiple functions is configured to be independently turned on at the same time.

Exemplarily, the fuel cell thermal management function comprises a fuel cell cold start mode, a fuel cell preheating mode, and a fuel cell cooling mode.

Exemplarily, in the present embodiment, the condition of turning on the fuel cell cold start mode is that the temperature of the fuel cell 107 is lower than 0°C; and the condition of exiting the fuel cell cold start mode is that the temperature of the fuel cell 107 is higher than 40°C.

In response to the fuel cell cold start mode being turned on, the following components need to be used:
the state of the third four-way valve 306 is that the port I is communicated with the port L and the port J is communicated with the port K, the third water pump 203, the fourth water pump 204 and the electric heating apparatus 601 are turned on, and there is no requirement for the remaining components.

The condition of turning on the fuel cell preheating mode is that the temperature of the fuel cell 107 is lower than 30°C, and the temperature of the cooling liquid in the power motor thermal management loop is higher than the temperature of the cooling liquid in the fuel cell thermal management loop; and the condition of exiting the fuel cell preheating mode is that the temperature of the fuel cell 107 is higher than 40°C, or the temperature of the cooling liquid in the power motor thermal management loop is lower than the temperature of the cooling liquid in the fuel cell thermal management loop.

In response to the fuel cell preheating mode being turned on, the following components need to be used: the state of the first two-way valve 304 is "on", the state of the second two-way valve 305 is "off", and the state of the three-way valve 303 is that the port M is communicated with the port N, the state of the first four-way valve 301 is that the port A is communicated with the port D and the port B is communicated with the port C, the state of the second four-way valve 302 is that the port E is communicated with the port F and the port G is communicated with the port H, the state of the third four-way valve 306 is that the port I is communicated with the port L and the port J is communicated with the port K, the first water pump 201, the second water pump 202, the third water pump 203 and the forth water pump 204 are turned on, and there is no requirement for the remaining components.

The condition of turning on the fuel cell cooling mode is that the temperature of the fuel cell 107 is higher than 80°C; and the condition of exiting the fuel cell cooling mode is that the temperature of the fuel cell 107 is lower than 75°C.

In response to the fuel cell cooling mode being turned on, the following components need to be used: the fourth water pump 204 and the first fan 501 are turned on, and there is no requirement for the remaining components.

The power cell thermal management function comprises a power cell air conditioner cooling mode, a power cell self-circulation mode, a power cell heating mode, a fuel cell waste heat heating power cell mode, a power motor waste heat heating power cell mode, a first power cell fan cooling mode, and a second power cell fan cooling mode.

In the multiple modes of the power cell thermal management function, the priority of the power cell self-circulation mode is the highest, and the priority of the power cell air conditioner cooling mode takes the second place, and the priorities of the other modes are the same and are the lowest.

The condition of turning on the power cell air conditioner cooling mode is that the ambient temperature is higher than 10°C, and the highest temperature of the power cell 105 is higher than 40°C; and the condition of exiting the power cell air conditioner cooling mode is that the ambient temperature is lower than 8°C, or the highest temperature of the power cell 105 is lower than 36°C.

In response to the power cell air conditioner cooling mode being turned on, the following components need to be used: the state of the second two-way valve 305 is "off", the state of the three-way valve 303 is that the port M is communicated with the port O, the state of the first four-way valve 301 is that the port A is communicated with the port B and the port C is communicated with the port D, the second water pump 202 and the air conditioner compressor assembly 602 are turned on, and there is no requirement for the remaining components.

The condition of turning on the power cell self-circulation mode is that the temperature difference between power cell units is higher than 10°C, and the highest temperature of the power cell 105 is lower than 48°C; and the condition of exiting the power cell self-circulation mode is that the temperature difference between the power cell units is lower than 8°C, or the highest temperature of the power cell 105 is higher than 50°C.

In response to the power cell self-circulation mode being turned on, the following components need to be used: the state of the second two-way valve 305 is "off", the state of the three-way valve 303 is that the port M is communicated with the port O, the state of the first four-way valve 301 is that the port A is communicated with the port B and the port C is communicated with the port D, the second water pump 202 is turned on, and there is no requirement for the remaining components.

The condition of turning on the power cell heating mode of is that the whole vehicle is in a charging heating mode, and the lowest temperature of the power cell 105 is lower than 0°C; and the condition of exiting the power cell heating mode is that the whole vehicle exits the charging heating mode, or the lowest temperature of the power cell 105 is higher than 2°C.

In response to the power cell heating mode being turned on, the following components need to be used: the state of the second two-way valve 305 is "off", the state of the three-way valve 303 is that the port M is communicated with the port O, the state of the first four-way valve 301 is that the port A is communicated with the port B and the port C is communicated with the port D, the state of the second four-way valve 302 is that the port E is communicated with the port F and the port G is communicated with the port H, the second water pump 202, the third water pump 203 and the electric heating apparatus 601 are turned on, the air conditioner compressor assembly 602 is turned off, and there is no requirement for the remaining components.

The condition of turning on the fuel cell waste heat heating power cell mode is that the lowest temperature of the power cell 105 is lower than 10°C, and the temperature of the cooling liquid in the fuel cell thermal management loop is higher than 45°C; and the condition of exiting the fuel cell waste heat heating power cell mode is that the lowest temperature of the power cell 105 is higher than 15°C, or the temperature of the cooling liquid in the fuel cell thermal management loop is lower than 40°C.

In response to the fuel cell waste heat heating power cell mode being turned on, the following components need to be used: the state of the first two-way valve 304 is "off", the state of the second two-way valve 305 is "off", the state of the three-way valve 303 is that the port M communicates with the port N, the state of the first four-way valve 301 is that the port A is communicated with the port B and the port C is communicated with the port D, the state of the second four-way valve 302 is that the port E is communicated with the port F and the port G is communicated with the port H, the state of the third four-way valve 306 is that the port I is communicated with the port L and the port J is communicated with the port K, the second water pump 202, the third water pump 203 and the fourth water pump 204 are turned on, the air conditioner compressor assembly 602 is turned off, and there is no requirement for the remaining components.

The condition of turning on the power motor waste heat heating power cell mode is that the lowest temperature of the power cell 105 is lower than 10°C, and the temperature of the cooling liquid in the power motor thermal management loop is higher than the highest temperature of the power cell 105; and the condition of exiting the power motor waste heat heating power cell mode is that the lowest temperature of the power cell 105 is higher than 15°C, or the temperature of the cooling liquid in the power motor thermal management loop is lower than the highest temperature of the power cell 105.

In response to the power motor waste heat heating power cell mode being turned on, the following components need to be used: the state of the first two-way valve 304 is "on", the state of the second two-way valve 305 is "off", the state of the three-way valve 303 is that the port M is communicated with the port O, the state of the first four-way valve 301 is that the port A is communicated with the port D and the port B is communicated with the port C, the first water pump 201 and the second water pump 202 are turned on the air conditioner compressor assembly 602 is turned off, and there is no requirement for the remaining components.

The condition of turning on the first power cell fan cooling mode is that the highest temperature of the power cell 105 is higher than 30°C; and the condition of exiting the first power cell fan cooling mode is that the highest temperature of the power cell 105 is lower than 25°C.

In response to the first power cell fan cooling mode being turned on, the following components need to be used: the state of the first two-way valve 304 is "on", the state of the second two-way valve 305 is "off", the state of the three-way valve 303 is that the port M is communicated with the port N, the state of the first four-way valve 301 is that the port A is communicated with the port D and the port B is communicated with the port C, the state of the second four-way valve 302 is that the port E is communicated with the port F and the port G is communicated with the port H, the first water pump 201, the second water pump 202 and the first fan 501 are turned on, and there is no requirement for the remaining components.

The condition of turning on the second power cell fan cooling mode is that the ambient temperature is lower than 8°C, and the highest temperature of the power cell 105 is higher than 40°C; and the condition of exiting the second power cell fan cooling mode is that the ambient temperature is higher than 10°C, or the highest temperature of the power cell 105 is lower than 36°C.

In response to the second power cell fan cooling mode is turned on, the following components need to be used: the state of the first two-way valve 304 is "off", the state of the second two-way valve 305 is "on", the state of the three-way valve 303 is that the port M is communicated with the port N, the state of the first four-way valve 301 is that the port A is communicated with the port D and the port B is communicated with the port C, the state of the second four-way valve 302 is that the port E is communicated with the port F and the port G is communicated with the port H, the first water pump 201 and the second water pump 202 are turned on, and there is no requirement for the remaining components.

The power motor thermal management function comprises a power motor cooling mode.

The condition of turning on the power motor cooling mode is that the temperature of the charger 101 is higher than 40°C, or the temperature of the direct-current transformer 102 is higher than 40°C, or the temperature of the power motor inverter 103 is higher than 40°C, or the temperature of the power motor body 104 is higher than 40°C.

The condition of exiting the power motor cooling mode is that the temperature of the charger 101 is lower than 36°C, the temperature of the direct-current transformer 102 is lower than 36°C, the temperature of the power motor inverter 103 is lower than 36°C, and the temperature of the power motor body 104 is lower than 36°C.

In response to the power motor cooling mode is turned on, the following components need to be used: the first water pump 201 and the first fan 501 are turned on, and there is no requirement for the remaining components.

The passenger compartment thermal management function comprises an air conditioner refrigeration mode, a warm air heating mode, a fuel cell waste heat heating mode, a power motor waste heat heating mode, and a power cell waste heat heating mode.

In the multiple modes of the passenger compartment thermal management function, the air conditioner refrigeration mode, the warm air heating mode, the fuel cell waste heat heating mode and the power cell waste heat heating mode have the same priority and is configured to be turned on at the same time, and the priority of the power motor waste heat heating mode is the lowest.

The condition of turning on the air conditioner refrigeration mode is that the driver turns on an air conditioner switch; and the condition of exiting the air conditioner refrigeration mode is that the driver turns off the air conditioner switch.

In response to the air conditioner refrigeration mode being turned on, the following components need to be used: the air conditioner compressor assembly 602 and the second fan 502 are turned on, and there is no requirement for the remaining components.

The condition of turning on the warm air heating mode is that the driver turns on a warm air switch; and the condition of exiting the warm air heating mode is that the driver turns off the warm air switch.

In response to the warm air heating mode is turned on, the following components need to be used: the third water pump 203, the electric heating device 601 and the second fan 502 are turned on, and there is no requirement for the remaining components.

The condition of turning on the fuel cell waste heat heating mode is that the driver turns on the warm air switch, and the temperature of the cooling liquid in the fuel cell thermal management loop is higher than 80°C; and the condition of exiting the fuel cell waste heat heating mode is that the driver turns off the warm air switch, or the temperature of the cooling liquid in the fuel cell thermal management loop is lower than 75°C.

In response to the fuel cell waste heat heating mode being turned on, the following components need to be used: the state of the first two-way valve 304 is "off ", the state of the first four-way valve 301 is that the port A is communicated with the port B and the port C is communicated with the port D, the state of the second four-way valve 302 is that the port E is communicated with the port F and the port G is communicated with the port H, the state of the third four-way valve 306 is that the port I is communicated with the port L and the port J is communicated with the port K, the third water pump 203, the fourth water pump 204 and the second fan 502 are turned on, and there is no requirement for the remaining components.

The condition of turning on the power motor waste heat heating mode is that the driver turns on the warm air switch, and the temperature of the cooling liquid in the power motor thermal management loop is higher than a warm air set temperature; and the condition of exiting the power motor waste heat heating mode is that the driver turns off the warm air switch, or the temperature of the cooling liquid in the power motor thermal management loop is lower than the warm air set temperature.

In response to the power motor waste heat heating mode being turned on, the following components need to be used: the state of the first two-way valve 304 is "on ", the state of the second two-way valve 305 is "off", the state of the second four-way valve 302 is that the port F is communicated with the port G and the port E is communicated with the port H, the first water pump 201, the third water pump 203 and the second fan 502 are turned on, and there is no requirement for the remaining components.

The condition of turning on the power cell waste heat heating mode is that the driver turns on the warm air switch, and the temperature of the power cell 105 is higher than the warm air set temperature; and the condition of exiting the power cell waste heat heating mode is that the driver turns off the warm air switch, or the temperature of the power cell is lower than the warm air set temperature.

In response to the power cell waste heat heating mode being turned on, the following components need to be used: the state of the three-way valve 303 is that the port M is communicated with the port N, the second water pump 202, the third water pump 203 and the second fan 502 are turned on, and the remaining components are not required.

The working conditions of the multiple modes of the fuel cell thermal management function are independent of each other, and are not performed at the same time.

## Claims

1. A thermal management system of a fuel cell vehicle, comprising:
a power motor thermal management loop, which comprises a first water pump (201), a charger (101), a direct-current transformer (102), a power motor inverter (103), a power motor body (104) and a first radiator (401), which are communicated with each other in sequence, and the first water pump (201) is configured to drive a cooling liquid in the power motor thermal management loop to flow and exchange a heat with the first radiator (401), the power motor body (104), the power motor inverter (103), the direct-current transformer (102) and the charger (101);
a power cell thermal management loop, which comprises a second water pump (202), a second radiator (402), a third radiator (403) and a power cell (105), which are communicated with each other in sequence, and the second water pump (202) is configured to drive the cooling liquid in the power cell thermal management loop to flow and exchange the heat with the third radiator (403), the second radiator (402) and the power cell (105);
a fuel cell thermal management loop, which comprises a fourth water pump (204), a fuel cell (107) and a sixth radiator (406), which are communicated with each other in sequence, and the fourth water pump (204) is configured to drive the cooling liquid in the fuel cell thermal management loop to flow and exchange the heat with the fuel cell (107) and the sixth radiator (406); and
the power motor thermal management loop is configured to perform heat exchange with the fuel cell thermal management loop, so that the power motor thermal management loop preheats the fuel cell (107); and the power cell thermal management loop is configured to perform the heat exchange with the fuel cell thermal management loop, so that the fuel cell (107) heats the power cell (105).

2. The thermal management system of the fuel cell vehicle as claimed in claim 1, further comprising a passenger compartment thermal management loop, wherein the passenger compartment thermal management loop comprises a passenger compartment heating loop and a passenger compartment cooling loop, the passenger compartment heating loop is configured to heat a passenger compartment (106), and the passenger compartment cooling loop is configured to cool the passenger compartment (106).

3. The thermal management system of the fuel cell vehicle as claimed in claim 2, wherein the passenger compartment heating loop comprises a third water pump (203), the third radiator (403), a fourth radiator (404) and an electric heating device (601), and the electric heating device (601) is configured to heat the cooling liquid in the passenger compartment heating loop, and the third water pump (203) is configured to drive the cooling liquid in the passenger compartment heating loop to flow and exchange thermal with the third radiator (403) and the fourth radiator (404).

4. The thermal management system of the fuel cell vehicle as claimed in claim 2, wherein the passenger compartment cooling loop comprises an air conditioning compressor assembly (602), the second radiator (402) and a fifth radiator (405), the air conditioning compressor assembly (602) is configured to compress and cool a condensing agent in the passenger compartment cooling loop and drive the condensing agent to flow, and the condensing agent is configured to exchange the heat with the second radiator (402) and the fifth radiator (405).

5. The thermal management system of the fuel cell vehicle as claimed in claim 1, wherein the power motor thermal management loop further comprises a first temperature sensor (701), and the first temperature sensor (701) is configured to detect the temperature of the cooling liquid in the power motor thermal management loop after the cooling liquid flows out from a cooled assembly.

6. The thermal management system of the fuel cell vehicle as claimed in claim 1, wherein the power motor thermal management loop further comprises a first fan (501), the first fan (501) is configured on the first radiator (401), and the first fan (501) is configured to accelerate the heat dissipation rate of the first radiator (401).

7. The thermal management system of the fuel cell vehicle as claimed in any one of claims 1-6, wherein the fuel cell thermal management loop further comprises a wax thermostat (307), and the wax thermostat (307) is configured to control whether the cooling liquid in the fuel cell thermal management loop flow to the sixth radiator (406).

8. The thermal management system of the fuel cell vehicle as claimed in any one of claims 2-4, further comprising a third four-way valve (306), wherein the third four-way valve (306) is configured to control whether the passenger compartment heating loop is communicated with the fuel cell thermal management loop.

9. The thermal management system of the fuel cell vehicle as claimed in claim 1, further comprising a three-way valve (303), wherein the three-way valve (303) is configured to control whether the cooling liquid in the power cell thermal management loop flow to the third radiator (403).

10. The thermal management system of the fuel cell vehicle as claimed in claim 1, further comprising a first four-way valve (301), wherein the first four-way valve (301) is configured to control whether the power motor thermal management loop is communicated with the power cell thermal management loop.
